# EUROPÄISCHE PATENTSCHRIFT

(11) **EP 2 791 632 B1**
(45) Veröffentlichungstag und Bekanntmachung des Hinweises auf die Patenterteilung: **11.03.2020**
(21) Anmeldenummer: 12809202.0
(22) Anmeldetag: 13.12.2012
(51) Int. Cl.: G01F 23/36, G01F 25/00

(54) **FÜLLSTANDSGEBER IN EINEM KRAFTSTOFFBEHÄLTER EINES KRAFTFAHRZEUGS, HERSTELLVERFAHREN FÜR EINEN SOLCHEN FÜLLSTANDSGEBER UND VERFAHREN ZUM BETREIBEN EINES SOLCHEN FÜLLSTANDSGEBERS**
FILLING LEVEL SENSOR IN A FUEL TANK OF A MOTOR VEHICLE, PRODUCTION METHOD FOR SUCH A FILLING LEVEL SENSOR, AND METHOD FOR OPERATING SUCH A FILLING LEVEL SENSOR
INDICATEUR DE NIVEAU DE REMPLISSAGE DANS UN RÉSERVOIR DE CARBURANT D'UN VÉHICULE À MOTEUR, PROCÉDÉ PERMETTANT DE FABRIQUER UN TEL INDICATEUR DE NIVEAU DE REMPLISSAGE ET PROCÉDÉ PERMETTANT DE FAIRE FONCTIONNER UN TEL INDICATEUR DE NIVEAU DE REMPLISSAGE

(30) Priorität: 16.12.2011 DE 102011088816
(43) Veröffentlichungstag der Anmeldung: 22.10.2014
(73) Patentinhaber: Vitesco Technologies GmbH, 30165 Hannover (DE)
(72) Erfinder: KLEIN, Thomas, 44359 Dortmund (DE)
(86) Internationale Anmeldenummer: PCT/EP2012/075466
(87) Internationale Veröffentlichungsnummer: WO 2013/087802

(56) Entgegenhaltungen:
- EP-A2- 1 719 985
- WO-A1-2007/078221
- FR-A1- 2 659 441
- FR-A1- 2 737 298
- US-A- 4 107 998
- US-B1- 6 272 911

## Beschreibung

Gegenstand der Erfindung ist ein Füllstandsgeber in einem Kraftstoffbehälter eines Kraftfahrzeugs, bestehend aus einem Widerstandsnetzwerk, einem oder mehreren elektrischen Kontakten, welche in Abhängigkeit vom Verschwenken eines Hebelarms mit dem Widerstandsnetzwerk zur Erzeugung eines elektrischen Signals in Kontakt stehen und einen Schwimmer, der derart am Hebelarm befestigt ist, dass der Hebelarm durch den Schwimmer füllstandsabhängig bewegbar ist. Gegenstand der Erfindung ist weiter Herstellverfahren für einen solchen Füllstandsgeber und ein Verfahren zum Betreiben eines solchen Füllstandsgebers.

Derartige Hebelgeber sind seit langem bekannt und somit Stand der Technik. Die elektrischen Kontakte können als Schleifkontakte ausgebildet sein, welche an einem Bügel befestigt sind. Der Bügel ist mit dem Hebelarm verbunden, so dass die elektrischen Kontakte durch den Hebelarm bewegbar sind. Der Bügel ist in einem Träger gelagert, um das Verschwenken des Hebelarms zu gewährleisten. In dem Träger ist gleichzeitig das Widerstandsnetzwerk angeordnet. Es ist weiter bekannt, die elektrischen Kontakte als eine Vielzahl von Biegefedern einer Kontaktfederstruktur auszubilden, welche von einem Magneten in Kontakt mit dem Widerstandsnetzwerk gebracht werden, wobei die mit dem Widerstandsnetzwerk in Verbindung stehenden Biegefedern von der Position des Magneten abhängen, der Magnet mit dem Hebelarm verbunden ist und bei einem Verschwenken des Hebelarms über die Kontaktfederstruktur bewegt wird.

Es ist weiter bekannt, dass Kraftstoffbehälter in Kraftfahrzeugen eine von geometrischen Grundformen abweichende Form besitzen, wodurch der Füllstand nicht proportional zur Füllstandshöhe ist. Damit das beim Verschwenken des Hebelarms erzeugte elektrische Signal dem Füllstand entspricht, ist das Verhältnis von Füllhöhe zu Füllstand als Kennlinie in dem Widerstandsnetzwerk abgebildet. Dies ist z.B. in FR 2 737 298 A1 offenbart. Das letztendlich erzeugte elektrische Signal hängt jedoch von den Bauteiltoleranzen beginnend beim Schwimmer bis hin zum Kontakt am Widerstandsnetzwerk und der Montage des Füllstandsgebers ab. Aufgrund dessen kommt es zu Abweichungen des tatsächlich erzeugten elektrischen Signals zu dem nach der Kennlinie theoretisch erforderlichen elektrischen Signal. Daher muss jeder Füllstandsgeber von Hand justiert werden, damit das in einem bestimmten Auslenkwinkel des Hebelarms erzeugte elektrische Signal auch dem für diesen Auslenkwinkel theoretisch erforderlichen elektrischen Signal entspricht, wobei die Prüfung aufgrund des Aufwands auf wenige markante Punkte wie "Leer", "Reserve", "1/4", "1/2" und "Voll" beschränkt ist. Das Justieren von Hand verhindert eine automatische Montage des Füllstandgebers und erfordert zudem einen zusätzlichen Zeitaufwand.

Der Erfindung liegt die Aufgabe zugrunde, einen Füllstandsgeber zu schaffen, der einen geringeren Aufwand für das Justieren erfordert. Insbesondere soll der personelle Aufwand reduziert werden. Der Erfindung liegt als zweite Aufgabe zugrunde, ein Herstellverfahren für einen solchen Füllstandsgeber zu schaffen. Eine dritte Aufgabe besteht in der Schaffung eines Verfahrens zum Betreiben eines solchen Füllstandsgebers.

Gelöst wird die erste Aufgabe durch einen Füllstandsgeber nach Anspruch 1 dadurch, dass der Füllstandsgeber mit einer Elektronik verbunden ist und dass die Elektronik derart ausgebildet ist, dass sie zu den vom Füllstandsgebers erzeugten elektrischen Signalen jeweils ein korrespondierendes elektrisches Sollsignal bereitstellt.

Durch die Zuordnung und Bereitstellung des korrespondierenden elektrischen Sollsignals zum in Abhängigkeit vom Schwenkwinkel des Hebelarms erzeugten elektrischen Signals wird eine Art korrigiertes Signal für die weitere Darstellung bereitgestellt. Durch diese Art der elektronischen Justierung des erzeugten elektrischen Signals durch das korrespondierende Sollsignal, ist ein mechanisches Justieren des Hebelarms zum Erreichen eines möglichst exakt der Füllstandskennlinie entsprechenden elektrischen Signals nicht mehr notwendig. Die hierfür notwendigen für die elektronische Justierung können automatisiert ablaufen. Zudem ist das Zuordnen und Bereitstellen des korrespondierenden elektrischen Signals schneller als das Justieren des Hebelarms von Hand. Die elektronische Justierung erlaubt zudem das Justieren über den gesamten Schwenkwinkel des Hebelarms, ohne dass dadurch der zeitliche Aufwand wesentlich größer wäre als bei einer elektronischen Justierung einzelner Punkte. Auch im Reparatur- oder Wartungsfall ist der Füllstandsgeber mit geringem Aufwand wieder funktionsfähig.

Ein weiterer Vorteil besteht darin, dass für Kraftstoffbehälter mit ähnlichen Kennlinien Füllstandsgeber mit gleichem Widerstandsnetzwerk verwendet werden. Die exakte Anpassung des Füllstandsgebers an die jeweilige Kennlinie erfolgt über die Zuordnung und Bereitstellung der korrespondierenden elektrischen Sollsignale. Dadurch muss nicht mehr für jede Kraftstoffbehälterform ein eigenes Widerstandsnetzwerk entwickelt und produziert werden. Zudem können bereits bestehende Widerstandsnetzwerke auch für neue Kraftstoffbehälter genutzt werden. Dies hat geringere Fertigungskosten sowie Lager- und Logistikkosten aufgrund der geringeren Typenvielfalt zur Folge.

In einer vorteilhaften Ausgestaltung kann ein lineares Widerstandsnetzwerk zum Einsatz kommen, welches sich dadurch auszeichnet, dass es einfacher aufgebaut und herzustellen ist. Linear bedeutet dabei, dass mit einem solchen Widerstandsnetzwerk eine in Abhängigkeit vom Schwenkwinkel des Hebelarms lineare Kennlinie erzeugt wird, während bisherige Widerstandnetzwerke aufgrund der komplizierten Formen der Kraftstoffbehälter bezüglich des Schwenkwinkels nichtlineare Kennlinien erzeugen. Die von einem solchen linearen Widerstandsnetzwerk erzeugten elektrischen Signale sind dadurch aufgrund der Form des jeweiligen Kraftstoffbehälters mit größeren Fehlern behaftet, über die Zuordnung der speziellen Kennlinie mit den korrespondierenden Sollsignalen lässt sich trotzdem ein den tatsächlichen Füllstand exakt widergebendes elektrisches Signal erzeugen.

In einer Ausgestaltung ist die Elektronik mit einer Anzeigeeinheit verbunden ist, in der das korrespondierende elektrische Sollsignal darstellbar ist. Diese Anzeigeeinheit kann beispielsweise ein Kombiinstrument des Kraftfahrzeugs sein.

Das Ablegen der erzeugbaren elektrischen Signalen und der korrespondierenden elektrischen Sollsignale geschieht in vorteilhafter Ausgestaltung in einem programmierbaren Baustein, der Bestandteil der Elektronik ist.

Die Elektronik ist relativ einfach und somit kostengünstig gestaltet, wenn es sich dabei um eine ausschließlich für den Betrieb des Füllstandsgebers vorgesehene Elektronik handelt. In besonderes einfacher Ausgestaltung ist diese Elektronik am Träger oder auf dem Substrat des Füllstandsgebers angeordnet.

Eine separate Anordnung der Elektronik wird vermieden, wenn die Elektronik in eine weitere Elektronik integriert ist. Hierbei ist es von Vorteil, wenn dazu eine Elektronik in der Nähe des Füllstandsgebers Verwendung findet, wie dies beispielsweise bei einer Elektronik zur Steuerung der Kraftstoffpumpe der Fall ist. Solche Elektroniken sind beispielsweise in einem Flansch zum Verschließen einer Öffnung eines Kraftstoffbehälters angeordnet.

In einer anderen Ausgestaltung ist die Elektronik in eine Motorsteuerung des Kraftfahrzeugs integriert. Da Motorsteuerungen eine Vielzahl von einzelnen Steuerungen enthalten und dementsprechend hardwaremäßig ausgestattet sind und die Elektronik für den Füllstandsgeber im Vergleich dazu einen relativ geringen Aufwand darstellt, lässt sich die Elektronik mit geringem Aufwand in die Motorsteuerung integrieren, ohne hierzu hardwaremäßige Erweiterungen an der Motorsteuerung vorzunehmen.

Der Wegfall der mechanischen Justierung des Hebelarms entfällt zudem die Forderung als Material des Hebelarms ein einfach und schnell von Hand zu justierendes Material wie beispielsweise einen Metalldraht, zu verwenden. Der erfindungsgemäße Füllstandsgeber erlaubt daher die Verwendung anderer Materialien für den Hebelarm. Hierbei hat sich als vorteilhaft herausgestellt, den Hebelarm aus einem kraftstoffbeständigen Kunststoff herzustellen. Die Verwendung von Kunststoff ermöglicht die Verwendung eines leichteren Materials als Metall, wobei die erforderliche Formstabilität durch die Querschnittgestaltung des Hebelarms und nicht durch die verwendete Materialmenge erfolgt. Die daraus resultierende Gewichtsersparnis wirkt sich positiv auf den Schwimmer aus, da der Schwimmer aufgrund des Gewichts des Hebelarms entsprechend große Abmessungen oder eine sehr geringe Dichte aufweisen muss, um den nötigen Auftrieb zu erhalten. Die Verwendung von Kunststoff als Hebelarm erlaubt nunmehr die Verwendung von Schwimmern mit kleineren Abmessungen oder Schwimmer aus Materialien mit größerer spezifischer Dichte, die in der Regel kostengünstiger sind.

Die zweite Aufgabe wird gemäß Anspruch 10 dadurch gelöst, dass in Abhängigkeit vom Schwenkwinkel des Hebelarms erzeugte elektrische Signale korrespondierenden elektrischen Sollsignalen des jeweils selben Schwenkwinkels zugeordnet werden und dass diese Zuordnung der elektrischen Signale in einer Elektronik gespeichert wird.

Bei diesem Verfahren wird der Hebelarm von einer Endstellung in die andere Endstellung bewegt. Die dabei erzeugten elektrischen Signale werden in Abhängigkeit vom Schwenkwinkel des Hebelarms vorgegebenen Sollsignalen zugeordnet, so dass für die erfassten Schwenkwinkel des Hebelarms das jeweils vom Füllstandsgeber erzeugte elektrische Signal und das korrespondierende Sollsignal vorliegt. Diese Zuordnung der beiden Signale zu einem bestimmten Schwenkwinkel wird in der Elektronik für den Füllstandsgeber gespeichert. Damit wurde der Füllstandsgeber elektronisch justiert, so dass eine mechanische Justierung des Hebelarms, zur Anpassung der erzeugten elektrischen Signale an den Schwenkwinkel nicht mehr notwendig ist. Ein weiterer Vorteil dieses Verfahrens besteht darin, dass bereits mit einem einmaligen Verschwenken des Hebelarms die Zuordnung erfolgt. Ein mehrmaliges Nachjustieren, wie dies beim Justieren von Hand die Regel ist, entfällt.

Eine Kontrolle der Zuordnung lässt sich mit geringem Aufwand realisieren, indem vor der Speicherung der Zuordnung der Hebelarm ein zweites Mal von einer Endlage die andere Endlage bewegt wird, und dass die Signale des ersten Verschwenkens mit den Signalen des zweiten ersten Verschwenkens verglichen werden und erst bei Übereinstimmung die Zuordnung zu den korrespondierenden Sollsignalen vorgenommen wird.

Der Aufwand für die Elektronik wird erheblich reduziert, wenn lediglich einige wenige markante Punkte des Füllstandes nach diesem Verfahren gespeichert werden. Derartige Punkte sind die den Füllständen "Leer", "Reserve", "1/4", "1/2" und "Voll". Es werden nur die dabei erzeugten elektrischen Signale den korrespondierenden elektrischen Sollsignalen des jeweils selben Schwenkwinkels zugeordnet. Die zwischen diesen Füllständen liegenden erzeugbaren elektrischen Signale werden für die Zuordnung zu den elektrischen Sollsignalen interpoliert.

Für eine hohe Genauigkeit der Füllstandsanzeige über den gesamten Bereich ist eine exakte Nachbildung der Kennlinie vorteilhaft, wobei für die Zuordnung der erzeugbaren elektrischen Signale Signale in Schritten von 1°, vorzugsweise 3° und insbesondere 5° des Verschwenkwinkels des Hebelarms verwendet werden. Je nach Behälterform, -volumen und Schwenkwinkel kann die entsprechende Schrittweite gewählt werden.

Die Speicherung der Zuordnung gestaltet sich besonders einfach, wenn die Zuordnung der elektrischen Signale in einem programmierbaren Baustein der Elektronik erfolgt.

Die dritte Aufgabe wird gemäß Anspruch 15 dadurch gelöst, dass die vom Füllstandssensor erzeugten elektrischen Signale einer Elektronik zugeführt werden, dass in der Elektronik in Abhängigkeit vom erzeugten elektrischen Signal des Füllstandssensors ein korrespondierendes elektrisches Sollsignal bereitgestellt wird.

Mit diesem Verfahren wird der Elektronik ein bei einem bestimmten Schwenkwinkel des Hebelarms erzeugtes elektrisches Signal zugeführt. Über die bei der Herstellung in der Elektronik gespeicherte Zuordnung von erzeugtem elektrischen Signal zu korrespondierendem elektrischen Signal für je einen bestimmten Schwenkwinkel, ist die Elektronik in der Lage, das diesem Schwenkwinkel entsprechende korrespondierende elektrische Sollsignal bereitzustellen, so dass es beispielsweise an eine Anzeigeeinheit für den Füllstand weitergeleitet werden kann. Auf diese Weise wird von der Elektronik in jedem Füllstandsgeber zu jedem Schwenkwinkel immer ein definiertes Sollsignal bereitgestellt. Die Schwankungsbreite des Signals bei einem bestimmten Schwenkwinkel wird dadurch auf Null reduziert. Dies wirkt sich vorteilhaft auf nachfolgende Geräte aus, die diese elektrischen Signale verarbeiten, da diese nun ebenfalls die Schwankungsbreite der elektrischen Signale nicht mehr beachten müssen.

An einem Ausführungsbeispielen wird die Erfindung näher erläutert. Es zeigen in:
- Fig. 1: einen Kraftstoffbehälter,
- Fig. 2: den Füllstandsgeber in der Endkontrolle und
- Fig. 3: die elektrischen Signale in Abhängigkeit vom Schwenkwinkel.

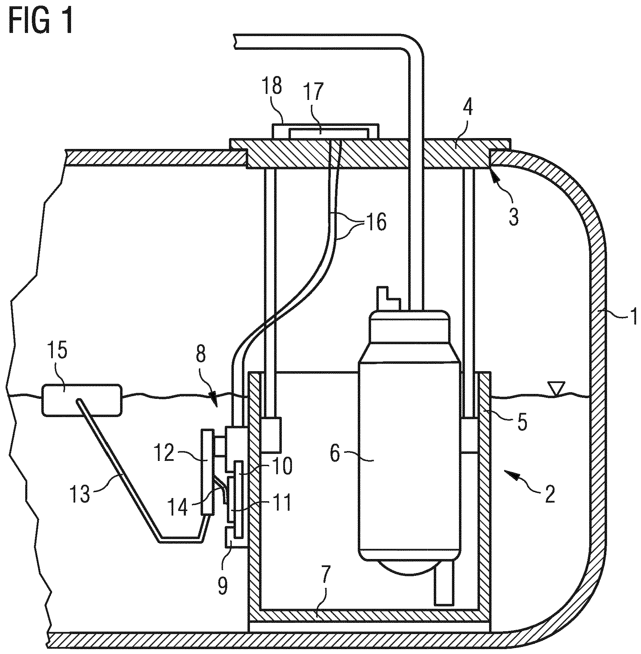

Der in Fig. 1 dargestellte Kraftstoffbehälter 1 enthält eine Fördereinheit 2. Die Fördereinheit 2 wird durch eine Öffnung 3 des Kraftstoffbehälters 1 eingesetzt, wobei ein Flansch 4 die Öffnung 3 im Kraftstoffbehälter 1 verschließt. Die Fördereinheit 2 umfasst einen Schwalltopf 5, der neben Kraftstoff unter anderem eine darin angeordnete Kraftstoffpumpe 6 aufnimmt, die den Kraftstoff zu einer nicht dargestellten Brennkraftmaschine des Kraftfahrzeugs fördert. Der Schwalltopf ist über zwei Abstützelemente 7 mit dem Flansch 4 derart verbunden, dass die Fördereinheit 2 mit dem Schwalltopf 5 auf dem Boden des Kraftstoffbehälters 1 aufsitzt. Am Schwalltopf 5 ist ein Füllstandsgeber 8 befestigt. Der Füllstandsgeber 8 besitzt dazu einen Träger 9 zur Befestigung am Schwalltopf 5. Auf dem Träger 9 ist gekapselt oder ungekapselt ein Substrat 10 mit einem darauf angeordneten Widerstandsnetzwerk 11 befestigt. Ein in einem Bügel 12 aufgenommener Hebelarm 13 ist derart am Träger 9 gelagert, dass er über das Substrat 10 mit dem Widerstandsnetzwerk 11 schwenken kann. Ein oder mehrere elektrische Kontakte 14 stehen in Abhängigkeit vom Verschwenken des Hebelarms 13 mit dem Widerstandsnetzwerk 11 in Verbindung, so dass ein elektrisches Signal erzeugt wird. Das Verschwenken des Hebelarms 13 erfolgt in Abhängigkeit vom Füllstand im Kraftstoffbehälter 1, indem das freie Ende des Hebelarms 13 mit einem Schwimmer 15 verbunden ist. Über zwei elektrische Leitungen 16 ist das Widerstandsnetzwerk 11 mit einer im Flansch 4 angeordneten Elektronik 17 verbunden, wobei die Elektronik 17 auf der der Außenseite des Kraftstoffbehälters 1 zugewandten Seite des Flansches 4 angeordnet ist. Zum Schutz vor Umwelteinflüssen ist die Elektronik 17 mit einem Gehäuse 18 abgedeckt.

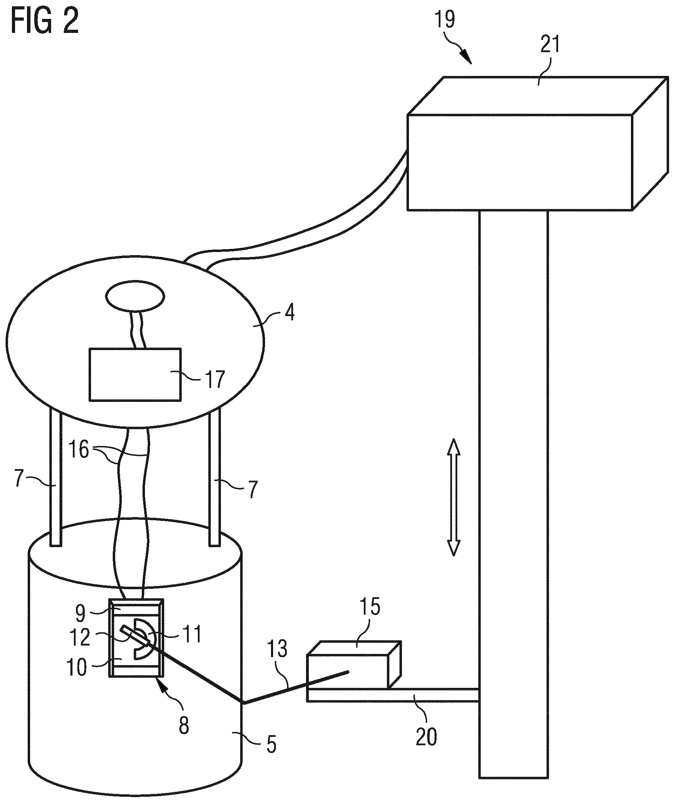

Figur 2 zeigt die Kraftstoff-Fördereinheit 2 in einem Kontrollstand. Hierzu ist die Elektronik 17 des Füllstandsgebers 8 mit dem Kontrollstand 19 verbunden. Über eine entsprechende Vorrichtung 20 wird der Schwimmer 15 von einer Endlage in die andere Endlage bewegt. Während dieser Bewegung erzeugt der Füllstandsgeber 8 eine Vielzahl von elektrischen Signalen, die über die elektrischen Leitungen 16 und die Elektronik 17 von der Prüfelektronik 21 gespeichert werden. Gleichzeitig wird aus der Bewegung der Vorrichtung 20 der entsprechende Schwenkwinkel ermittelt, so dass jedem Schwenkwinkel ein erzeugtes elektrisches Signal des Füllstandsgebers 8 zugeordnet wird. Die Tankkennlinie ist ebenfalls in der Prüfelektronik 21 gespeichert, wobei Tankkennlinie bedeutet, dass in Abhängigkeit von der Form des Kraftstoffbehälters 1 und des geplanten Schwenkwinkels des Füllstandsgebers 8 die Sollsignale den jeweiligen Schwenkwinkeln zugeordnet wurden. Über diese Schwenkwinkel lassen sich nun zu den gemessenen elektrischen Signalen die korrespondierenden Sollsignale zuordnen.

Diese Schritte wurden bei einer Bewegung des Schwimmers 15 aus der unteren Endlage in die obere Endlage durchgeführt. Beim Zurückfahren der Vorrichtung 20 in die Ausgangsstellung wird der Schwimmer 15 zwangsläufig von der oberen Endlage in die untere Endlage bewegt. Diese Bewegung wird zur Überprüfung der ersten Bewegung genutzt, indem die eingangs genannten Schritte wiederholt werden. Anschließend werden die erzeugten elektrischen Signale in Abhängigkeit vom Schwenkwinkel aus beiden Bewegungen verglichen. Sofern beide Signalreihen übereinstimmen, wird die Zuordnung der korrespondierenden Sollsignale zu den erzeugten elektrischen Signalen in der Elektronik 17 im Flansch 4 gespeichert.

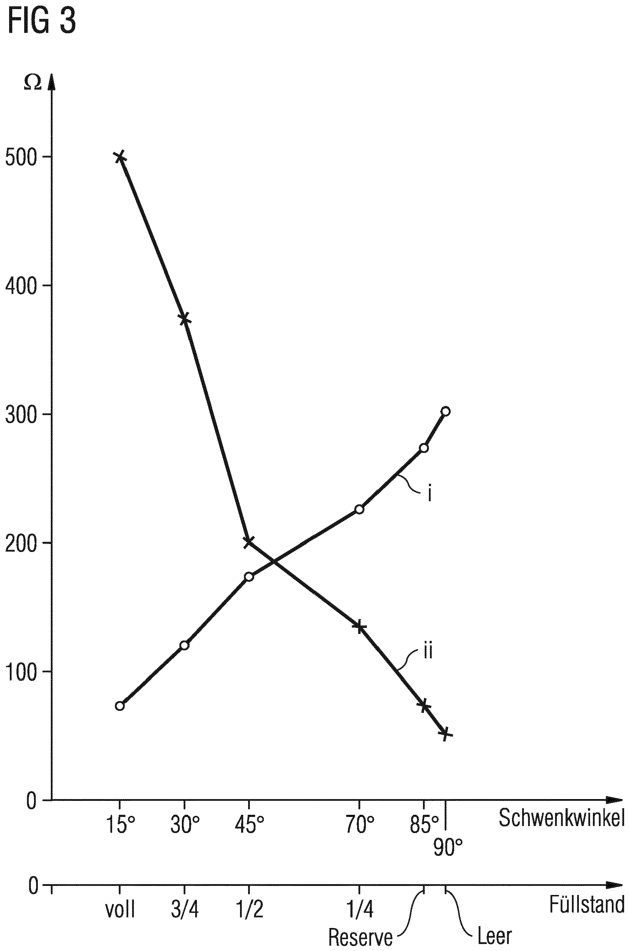

Die Figur 3 zeigt ein Diagramm mit zwei Signalreihen. Die Signalreihe i zeigt die vom Füllstandsgeber erzeugten elektrischen Signale, während die Signalreihe ii das jeweils korrespondierende Sollsignal zeigt, welches von der Elektronik für die Weiterleitung bereitgestellt wird. So wurde bei einem Schwenkwinkel von 70° ein elektrisches Signal vom 220 Ω erzeugt. Diesem ist ein Sollsignal von 130 Ω zugeordnet, so dass die Elektronik bei einem Eingangssignal von 220 Ω ein Ausgangssignal von 130 Ω bereitstellt.

## Patentansprüche

1. Füllstandsgeber in einem Kraftstoffbehälter eines Kraftfahrzeugs, bestehend aus einem Substrat mit einem darauf angeordneten Widerstandsnetzwerk, einem oder mehreren elektrischen Kontakten, welche in Abhängigkeit vom Verschwenken eines Hebelarms mit dem Widerstandsnetzwerk zur Erzeugung eines elektrischen Signals in Kontakt stehen und einen Schwimmer, der derart am Hebelarm befestigt ist, dass der Hebelarm durch den Schwimmer füllstandsabhängig bewegbar ist, **dadurch gekennzeichnet, dass** der Füllstandsgeber (8) mit einer Elektronik (17) verbunden ist, und dass die Elektronik (17) derart ausgebildet ist, dass sie zu den vom Füllstandsgeber (8) erzeugten elektrischen Eingangssignalen jeweils ein korrespondierendes elektrisches Ausgangssollsignal bereitstellt.

2. Füllstandsgeber nach Anspruch 1, **dadurch gekennzeichnet, dass** die Elektronik (17) mit einer Anzeigeeinheit verbunden ist, in der das korrespondierende elektrische Sollsignal darstellbar ist.

3. Füllstandsgeber nach Anspruch 1, **dadurchgekennzeichnet**, dass die Elektronik (17) einen programmierbaren Baustein (22) besitzt, in dem zu den erzeugbaren elektrischen Signalen die korrespondierenden elektrischen Sollsignale gespeichert sind.

4. Füllstandsgeber nach Anspruch 1, **dadurchgekennzeichnet**, dass die Elektronik (17) eine ausschließlich für den Betrieb des Füllstandsgebers (8) vorgesehene Elektronik (17) ist.

5. Füllstandsgeber nach Anspruch 3, **dadurchgekennzeichnet**, dass die Elektronik (17) am Träger (9) oder auf dem Substrat (10) des Füllstandsgebers (8) angeordnet ist.

6. Füllstandsgeber nach Anspruch 1 oder 2, **dadurch gekennzeichnet, dass** die Elektronik (17) in eine weitere Elektronik integriert ist, die in einem eine Öffnung (3) eines Kraftstoffbehälters (1) verschließenden Flansch (4) angeordnet ist.

7. Füllstandsgeber nach Anspruch 1 oder 2, **dadurch gekennzeichnet, dass** die Elektronik (17) in eine Motorsteuerung des Kraftfahrzeug integriert ist.

8. Füllstandsgeber nach zumindest einem der vorhergehenden Ansprüche, **dadurch gekennzeichnet, dass** das Widerstandsnetzwerk (11) ein lineares Widerstandsnetzwerk ist.

9. Füllstandsgeber nach zumindest einem der vorhergehenden Ansprüche, **dadurch gekennzeichnet, dass** der Hebelarm (13) aus einem kraftstoffbeständigen Kunststoff besteht.

10. Verfahren zum Herstellen eines Füllstandsgebers, bei dem der Hebelarm von einer Endlage in die andere Endlage bewegt wird, **dadurch gekennzeichnet, dass** in Abhängigkeit vom Schwenkwinkel des Hebelarms erzeugte elektrische Eingangssignale korrespondierenden elektrischen Ausgangssollsignalen des jeweils selben Schwenkwinkels zugeordnet werden und dass diese Zuordnung der elektrischen Signale in einer Elektronik gespeichert wird.

11. Verfahren nach Anspruch 10, **dadurch gekennzeichnet, dass** vor der Speicherung der Zuordnung der Hebelarm ein zweites Mal von einer Endlage die andere Endlage bewegt wird, dass die in Abhängigkeit vom Schwenkwinkel des Hebelarms erzeugte elektrische Signale mit den Signalen des ersten Verschwenkens verglichen werden und erst bei Übereinstimmung die Speicherung vorgenommen wird.

12. Verfahren nach Anspruch 10, **dadurch gekennzeichnet, dass** der Hebelarm in die den Füllständen "Leer", "Reserve", "1/4", "1/2" und "Voll" entsprechenden Schwenkwinkel bewegt wird, und lediglich die dabei erzeugten elektrischen Signale den korrespondierenden elektrischen Sollsignalen des jeweils selben Schwenkwinkels zugeordnet werden diese zugeordnet werden, und dass die zwischen diesen Füllständen liegenden erzeugbaren elektrischen Signale für die Zuordnung zu den elektrischen Sollsignalen interpoliert werden.

13. Verfahren nach Anspruch 10, **dadurch gekennzeichnet, dass** für die Zuordnung der erzeugbaren elektrischen Signale Signale in Schritten von 1°, vorzugsweise 3° und insbesondere 5° des Verschwenkwinkels des Hebelarms verwendet werden.

14. Verfahren nach zumindest einem der Ansprüche 10 bis 13, **dadurch gekennzeichnet, dass** die Zuordnung der elektrischen Signale in einem programmierbaren Baustein der Elektronik erfolgt.

15. Verfahren zum Betreiben eines Füllstandsgebers bei dem elektrische Kontakte in Abhängigkeit vom Verschwenken eines Hebelarms mit einem Widerstandsnetzwerk in Kontakt gebracht werden, so dass in dem Widerstandsnetzwerk ein dem Füllstand entsprechendes elektrisches Signal erzeugt wird, **dadurch gekennzeichnet, dass** das erzeugte elektrische Signal einer Elektronik zugeführt wird und in der Elektronik zu dem erzeugten elektrischen Eingangssignal ein korrespondierendes elektrisches Ausgangssollsignal generiert wird.

16. Verfahren nach Anspruch 15, **dadurch gekennzeichnet, dass** das korrespondierende elektrische Sollsignal an eine Anzeigeeinheit für den Füllstand weitergeleitet wird.

## Claims

1. Filling level sensor in a fuel container of a motor vehicle, comprising a substrate having a resistance network arranged thereon, one or more electrical contacts, which are in contact with the resistance network, as a function of the pivoting of a lever arm, in order to produce an electrical signal, and a float, which is fastened to the lever arm in such a way that the lever arm can be moved by the float as a function of the filling level, **characterized in that** the filling level sensor (8) is connected to electronics (17), and **in that** the electronics (17) are embodied in such a way that they provide in each case a corresponding electrical output setpoint signal for the electrical input signals which are produced by the filling level sensor (8).

2. Filling level sensor according to Claim 1, **characterized in that** the electronics (17) are connected to a display unit in which the corresponding electrical setpoint signal can be displayed.

3. Filling level sensor according to Claim 1, **characterized in that** the electronics (17) have a programmable module (22) in which the corresponding electrical setpoint signals for electrical signals which can be produced are stored.

4. Filling level sensor according to Claim 1, **characterized in that** the electronics (17) are electronics (17) which are provided exclusively for operating the filling level sensor (8).

5. Filling level sensor according to Claim 3, **characterized in that** the electronics (17) are arranged on the carrier (9) or on the substrate (10) of the filling level sensor (8).

6. Filling level sensor according to Claim 1 or 2, **characterized in that** the electronics (17) are integrated into further electronics which are arranged in a flange (4) which closes an opening (3) in a fuel container (1).

7. Filling level sensor according to Claim 1 or 2, **characterized in that** the electronics (17) are integrated into an engine controller of the motor vehicle.

8. Filling level sensor according to at least one of the preceding claims, **characterized in that** the resistance network (11) is a linear resistance network.

9. Filling level sensor according to at least one of the preceding claims, **characterized in that** the lever arm (13) is composed of a fuel-resistant plastic.

10. Method for manufacturing a filling level sensor in which the lever arm is moved from one end position into the other end position, **characterized in that** electrical input signals which are produced as a function of the pivoting angle of the lever arm are assigned to corresponding electrical output setpoint signals of the same respective pivoting angle, and **in that** this assignment of the electrical signals is stored in electronics.

11. Method according to Claim 10, **characterized in that** before the storage of the assignment the lever arm is moved a second time from one end position into the other end position, **in that** the electrical signals which are produced as a function of the pivoting angle of the lever arm are compared with the signals of the first pivoting, and the storage is not performed until they correspond.

12. Method according to Claim 10, **characterized in that** the lever arm is moved into the pivoting angles corresponding to the "empty", "reserve", "1/4", "1/2" and "full" filling levels, and only the electrical signals which are produced here are assigned to the corresponding electrical setpoint signals of the same respective pivoting angle, and **in that** the electrical signals which can be produced and which lie between these filling levels are interpolated for the assignment to the electrical setpoint signals.

13. Method according to Claim 10, **characterized in that** signals in steps of 1°, preferably 3° and in particular 5°, of the pivoting angle of the lever arm are used for the assignment of the electrical signals which can be produced.

14. Method according to at least one of Claims 10 to 13, **characterized in that** the assignment of the electrical signals takes place in a programmable module of the electronics.

15. Method for operating a filling level sensor in which electrical contacts are placed in contact with a resistance network as a function of the pivoting of a lever arm, with the result that an electrical signal which corresponds to the filling level is produced in the resistance network, **characterized in that** the electrical signal which is produced is fed to electronics and an electrical output setpoint signal which corresponds to the electrical input signal which is produced is generated in the electronics.

16. Method according to Claim 15, **characterized in that** the corresponding electrical setpoint signal is passed on to a display unit for the filling level.

## Revendications

1. Indicateur de niveau de remplissage dans un réservoir de carburant d'un véhicule à moteur, constitué d'un substrat sur lequel est disposé un réseau de résistances, d'un ou de plusieurs contacts électriques qui sont en contact avec le réseau de résistances en fonction du pivotement d'un bras de levier pour générer un signal électrique, et d'un flotteur qui est fixé sur le bras de levier de manière à ce que le bras de levier puisse être déplacé par le flotteur en fonction du niveau de remplissage,
**caractérisé en ce que** l'indicateur de niveau de remplissage (8) est relié à un système électronique (17), et **en ce que** le système électronique (17) est conçu de manière à ce qu'il fournisse, pour chacun des signaux électriques générés par l'indicateur de niveau de remplissage (8), un signal électrique de consigne de sortie correspondant.

2. Indicateur de niveau de remplissage selon la revendication 1, **caractérisé en ce que** le système électronique (17) est relié à une unité d'affichage dans laquelle le signal électrique de consigne correspondant peut être représenté.

3. Indicateur de niveau de remplissage selon la revendication 1, **caractérisé en ce que** le système électronique (17) possède un composant programmable (22) dans lequel les signaux électriques de consigne correspondants sont stockés pour les signaux électriques pouvant être générés.

4. Indicateur de niveau de remplissage selon la revendication 1, **caractérisé en ce que** le système électronique (17) est un système électronique (17) prévu exclusivement pour le fonctionnement de l'indicateur de niveau de remplissage (8).

5. Indicateur de niveau de remplissage selon la revendication 3, **caractérisé en ce que** le système électronique (17) est disposé sur le support (9) ou sur le substrat (10) de l'indicateur de niveau de remplissage (8).

6. Indicateur de niveau selon la revendication 1 ou 2, **caractérisé en ce que** le système électronique (17) est intégré dans un autre système électronique qui est disposé dans une flasque (4) refermant un orifice (3) d'un réservoir de carburant (1).

7. Indicateur de niveau de remplissage selon la revendication 1 ou 2, **caractérisé en ce que** le système électronique (17) est intégré dans un système de commande de moteur du véhicule à moteur.

8. Indicateur de niveau de remplissage selon au moins l'une des revendications précédentes, **caractérisé en ce que** le réseau de résistances (11) est un réseau de résistances linéaire.

9. Indicateur de niveau de remplissage selon au moins l'une des revendications précédentes, **caractérisé en ce que** le bras de levier (13) est constitué d'une matière plastique résistante aux carburants.

10. Procédé de fabrication d'un indicateur de niveau de remplissage, dans lequel le bras de levier est déplacé d'une position d'extrémité à l'autre position d'extrémité, **caractérisé en ce que** des signaux électriques d'entrée générés en fonction de l'angle de pivotement du bras de levier sont associés à des signaux électriques de consigne de sortie correspondants ayant le même angle de pivotement respectif et **en ce que** ladite association des signaux électriques est stockée dans un système électronique.

11. Procédé selon la revendication 10, **caractérisé en ce que**, avant le stockage de l'association du bras de levier, le bras de levier est déplacé une seconde fois d'une position d'extrémité à l'autre position d'extrémité, **en ce que** les signaux électriques générés en fonction de l'angle de pivotement du bras de levier sont comparés aux signaux du premier pivotement et **en ce que** le stockage n'est effectué qu'en cas de concordance.

12. Procédé selon la revendication 10, **caractérisé en ce que** le bras de levier est déplacé vers les angles de pivotement correspondant aux niveaux de remplissage "vide", "réserve", "1/4", "1/2" et "plein", et **en ce que** seuls les signaux électriques ainsi générés sont associés aux signaux électriques de consigne correspondants ayant le même angle de pivotement respectif, et **en ce que** les signaux électriques qui peuvent être générés entre lesdits niveaux de remplissage sont interpolés pour l'association aux signaux électriques de consigne.

13. Procédé selon la revendication 10, **caractérisé en ce que**, pour l'association des signaux électriques pouvant être générés, des signaux par pas de 1°, de préférence de 3° et en particulier de 5° de l'angle de pivotement du bras de levier sont utilisés.

14. Procédé selon au moins l'une des revendications 10 à 13, **caractérisé en ce que** l'association des signaux électriques est effectuée dans un composant électronique programmable.

15. Procédé de fonctionnement d'un indicateur de niveau de remplissage, dans lequel des contacts électriques sont mis en contact avec un réseau de résistances en fonction du pivotement d'un bras de levier de manière à ce qu'un signal électrique correspondant au niveau de remplissage soit généré dans le réseau de résistances,
**caractérisé en ce que** le signal électrique généré est envoyé à un système électronique et **en ce qu'**un signal électrique de consigne de sortie correspondant est généré dans le système électronique pour le signal électrique d'entrée généré.

16. Procédé selon la revendication 15, **caractérisé en ce que** le signal électrique de consigne correspondant est transmis à une unité d'affichage du niveau de remplissage.
